# EUROPEAN PATENT APPLICATION

(11) **EP 1 714 551 A1**
(43) Date of publication of application: **25.10.2006**
(21) Application number: 06250426.1
(22) Date of filing: 26.01.2006
(51) Int. Cl.: A01K 93/02

(54) **Angling float**

(30) Priority: 22.02.2005 GB 0503585; 30.11.2005 GB 0524355
(71) Applicant: Dawson, Stephen Mark, Cadbury Heath, Bristol BS30 8AT (GB)
(72) Inventor: Dawson, Stephen Mark, Cadbury Heath, Bristol BS30 8AT (GB)
(74) Representative: Hocking, Adrian Niall

(57) **Abstract**

There is provided an angling float having a signal emitting element (12;112). The float, in use, emits an indicator signal, such as a beam of light or sound, before a bite occurs. The indicator signal is halted or obscured so as not to be receivable by the angler, when a bite occurs. The absence of the indicator signal causes the angler to realise that a bite has occurred.

The float comprises a, preferably two part slidable, float body (10; 110) and a signal emitting element (12;112) which can emit an indicator signal comprising light and/or sound which is receivable by a user of the float when the float body (10;110) is in a non-bite condition, indicating that a bite has not occurred.

The float is characterised by means for halting the indicator signal or obscuring the indicator signal by the float body (10;110) from the user when the float body (10; 110) is in a bite condition, indicating that a bite has occurred.

## Description

The present invention relates to an angling float having a signal emitting element.

It is known to provide angling floats with signal emitting elements which emit indicator signals, such as light and/or sound. GB2286956A, JP8196176, JP2000004741, JP11113465 and KR9205393 are all examples of angling floats with a signal emitting element that is activated once a bite has occurred.

However, all of these prior art arrangements are reasonably complex, and require the indicator signal to be emitted only once the bite has occurred.

The present invention seeks to provide a simplified float arrangement that overcomes the above mentioned drawbacks.

According to the present invention, there is provided an angling float comprising a float body, and a signal emitting element which can emit an indicator signal comprising light and/or sound which is receivable by a user of the float when the float body is in a non-bite condition, indicating that a bite has not occurred, characterised by means for halting the indicator signal or obscuring the indicator signal by the float body from the user when the float body is in a bite condition, indicating that a bite has occurred.

Preferable and/or optional features of the invention are set forth in claims 2 to 10, inclusive.

The present invention will now be more particularly described, by way of example only, with reference to the accompanying drawings, in which :
Figure 1 is a diagrammatic view of first embodiment of an angling float, in accordance with the present invention and in a first 'non-bite' condition;
Figure 2 is a diagrammatic view similar to that of Figure 1, showing the angling float in a second 'bite' condition;
Figure 3 is an enlarged diagrammatic view of a movement limiting element, shown in Figures 1 and 2;
Figure 4 is a diagrammatic view of a second embodiment of an angling float, in accordance with the present invention and in the first 'non-bite' condition; and
Figure 5 is a diagrammatic view of the angling float shown in Figure 4, in the second 'bite' condition.

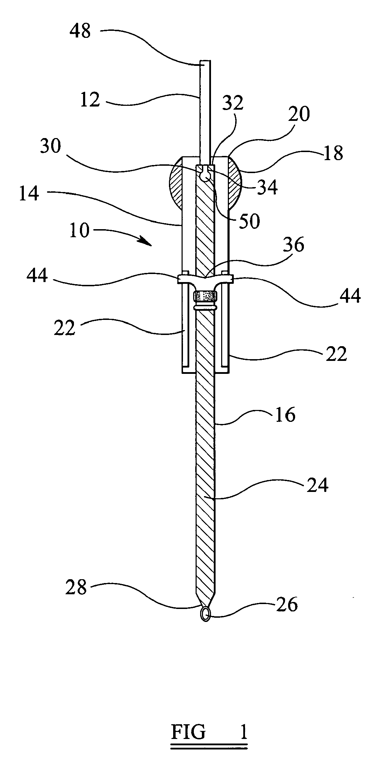

Referring firstly to Figures 1 to 3 of the drawings, there is shown an angling float which comprises a two part float body 10 and a signal emitting element 12. The float body 10 includes a first open-ended opaque, or partially opaque, tubular float part 14 and a second elongate float part 16 which is slidable in the first float part 14.

The first float part 14 includes a buoyancy 18, in this case at or adjacent to an in use upper end 20, and opposing slots 22 which extend parallel to the longitudinal extent of the first float part 14.

The second float part 16 includes a thin elongate buoyancy element 24 with an eye 26 at or adjacent to an in use lower end 28 for attachment to a line. The buoyancy element 24 includes a recess 30 at or adjacent to the in use upper end 32. The recess 30 has a necked portion 34 at an opening to the recess 30.

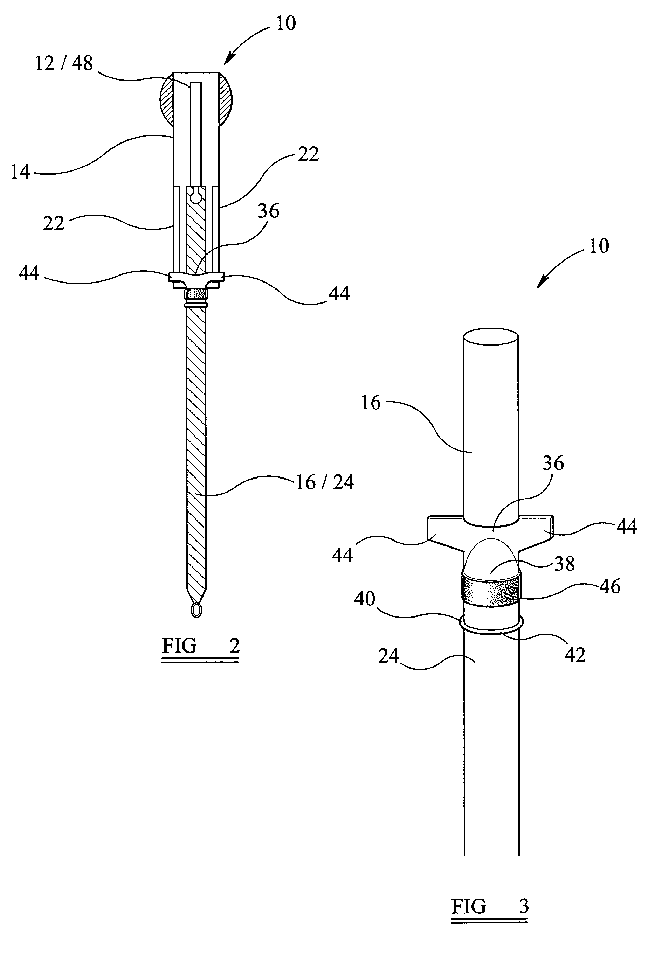

A movement limiting element 36, as best shown in Figure 3, is provided on the second float part 16 and is typically formed from plastics. In the present embodiment, the movement limiting element 36 is substantially plate shaped with a middle portion 38 profiled to be complementary or substantially complementary with a shape of the exterior surface of the buoyancy element 24. The shape of the middle portion 38 can be such as to allow the movement limiting element 36 to be push-fit or clipped to the buoyancy element 24.

The middle portion 38 also includes an out-turned lip or ridge 40 at or adjacent to, in this case, an in use lower end 42 of the movement limiting element 36.

The movement limiting element 36 further includes a wing 44 at each longitudinal side of the middle profiled portion 38. The wings 44 are dimensioned to provide a wingspan which is greater than a horizontal dimension of the in use first float part 14, and to provide a top-to-bottom dimension which is less than a longitudinal extent of the middle profiled portion 38. Consequently, the movement limiting element 36 is or is substantially T-shaped.

The movement limiting element 36 is releasably attached to the buoyancy element 24 by, or additionally with, an attachment device, such as a rubber band 46 or other similar device. The ridge 40 on the movement limiting element 36 prevents or limits undesirable separation of the band 46 from the movement limiting element 36, and the band 46 prevents or limits undesirable displacement along the longitudinal extent of the buoyancy element 24.

The second float part 16 with movement limiting element 36 attached is then inserted into the first float part 14, typically at an angle to allow the wings 44 of the movement limiting element 36 to engage in the respective slots 22 of the first float part 14 without undue force being exerted. The second float part 16 can then slide within the first float part 14, restricted only by the wings 44 of the movement limiting element 36 abutting ends of the slots 22.

The movement limiting element 36 is positioned on the longitudinal extent of the buoyancy element 24, so that the upper end 32 of the buoyancy element 24 having the recess 30 is at or adjacent to the upper end 20 of the first float part 14 when the wings 44 of the movement limiting element 36 abut the in use upper ends of the slots 22.

The signal emitting element 12, in this embodiment, is a glow tip device 48. These are widely available from angling retailers. The glow tip device 48 includes a chemically activated agent, which typically includes a luminescent isotope or isotopes. Upon activating the agent, the or each isotope luminesces, providing a light indicator signal which can be received or seen by the angler.

The glow tip device 48 includes a nodule-like portion 50 at one end which is complementarily or substantially complementarily shaped to match the recess 30 in the upper end 32 of the buoyancy element 24. A user then simply push-fit inserts the nodule-like portion 50 into the recess 30, which then grips the glow tip device 48 at the necked portion 34.

The longitudinal extents of the slots 22 of the first float part 14 are equal to or greater than the longitudinal extent of the glow tip device 48.

In use, with the movement limiting element 36 attached to the buoyancy element 24, the second float part 16 slidably engaged with the first float part 14, and the glow tip device 48 held in the recess 30 of the buoyancy element 24 and emitting light, the float, attached to a fishing line, is cast by the angler. Due to buoyancy, the upper end 32 of the second float part 16 is at or adjacent to the upper end 20 of the first float part 14, which is hereinafter referred to as the 'non-bite' condition. Consequently, the glow tip device 48 projects outwardly, or is spaced away in an outwards direction, from the first float part 14, and the emitted light indicator signal is easily viewable by the angler, especially during poor ambient lighting conditions, such as at night. This is beneficial in determining the exact positioning of the float at all times, and whether it might be caught up in any obstacles, such as reed beds.

The respective buoyancies of the first and second float parts 14 and 16 are such that the upper end 32 of the buoyancy element 24 of the second float part 16 remains at or adjacent to the upper end 20 of the first float part 14, or in the non-bite condition, until the hook attached via line to the float is taken, typically by a fish. In other words, the first float part 14 has greater buoyancy than the second float part 16 which is slightly less buoyant.

The float then assumes a 'bite condition', whereby the second float part 16 moves downwards relative to the first float part 14. Consequently, the wings 44 of the movement limiting element 36 move along the slots 22, and the upper end 32 of the buoyancy element 24 of the second float part 16 is drawn into the first float part 14. As a result of this relative movement, the glow tip device 48 is also fully drawn into the first float part 14, and thus becomes obscured from being viewed by the angler. The obscuring or disappearance of the light indicator signal indicates to the angler that a bite has occurred.

Although the movement limiting element 36 is a profiled plate, it can be in the form of a hinged clamp which is clamped around the buoyancy element 24 by the rubber band 46.

The buoyancy element 24 of the second float part 16 can have the movement limiting element 36 integrally formed therewith. In this case, the movement limiting element 36 is not releasable.

It is envisaged that the wings or other kinds of runners can be formed on the first float part, so as to project inwardly, and the slots can be formed on the second float part.

It is possible to utilise only a single runner and slot arrangement.

Other arrangements to limit the relative displacement of the first and second float parts 14 and 16 are also considered possible. For example, if the signal emitting element 12 was provided partway along the buoyancy element 24 of the second float part 16, then stops which simply contact ends of the first float part 14 and which are positioned along the buoyancy element 24 would allow the signal emitting element 12 to be drawn into the first float part 14 without allowing undesirable separation of the first and second float part 14, 16. In this case, the stops form, or form part of, the movement limiting element.

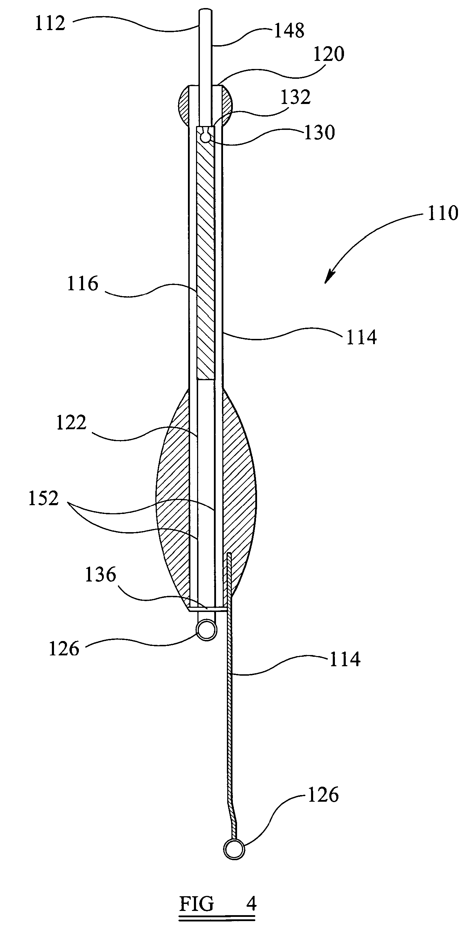

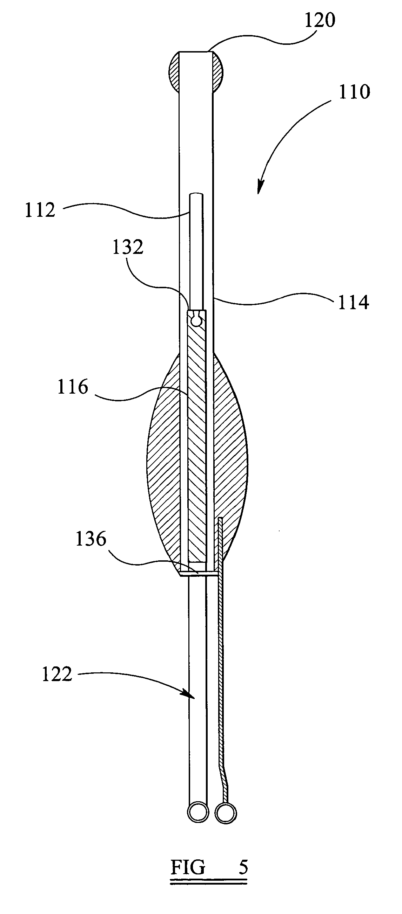

Referring now to Figures 4 and 5 of the drawing, there is shown a second embodiment of the float. This float is described in detail in GB0503585.2, the contents of which are incorporated herein by reference, and thus further detailed description will be omitted.

This float also comprises a float body 110 having first and second relatively slidable float parts 114 and 116, with the first outer float part 114 being the more buoyant or 'heavier' and the second inner float part 116 being slightly less buoyant or 'lighter'.

A movement limiting element 136, in the form of a pin, is included part way along the first float part 114, and the pin travels in a runner 122 of the second float part 116 formed by two parallel rails 152.

Both the first and second float part 114, 116 have eyes 126 for attachment of the float to fishing line.

As with the first embodiment, the second float part 116 includes a recess 130 at its in use upper end 132 to accept a glow tip device 148, which acts a signal emitting element 112. The first and second float parts 114, 116 are dimensioned so that the respective in use upper ends 120, 132 are at the same or adjacent levels as each other, when the float body 110 is in the 'non-bite' condition. As such, the glow tip device 148 projects outwardly, or is spaced away in an outwards direction, from the first float part 114, and light emitted from the glow tip device 148 is thus clearly visible to the angler.

When the hook is taken, the float body 110 assumes the 'bite condition, whereby the second float part 116 is drawn into the opaque tubular body of the first float part 114 by the movement of the hook transmitted through the attached line. The light emitted from the glow tip device 148 is thus again obscured or hidden from the eye of the angler, and the angler determines that a bite has occurred.

Although the signal emitting element is preferably a glow tip device, other signal emitting elements can be used. For example, although slightly more complicated, an electrically activated device, such as a light bulb or light emitting diode, can be used. In this case, a small power source, such as a battery, is carried on or within the float body, typically either on or within the first or second float part. The light indicator signal is thus again obscured by the first float part as the second float part is drawn downwards.

The float body may not necessarily need to be in a two part slidable form. If a switch is provided, either on the first or second float part, then the switch is operated by the hook being taken, and thus causes the light indicator signal of the signal emitting element to be extinguished.

The signal indicator element can be or include a sound emitting device, such as a speaker. This would be beneficial for blind or partially sighted anglers. In this case, the audible indicator signal is obscured or muffled, or halted altogether, when the float assumes the bite condition.

The floats described above can be provided assembled, or as a kit of parts.

Replacement glow tip devices can be purchased as and when necessary.

It is thus possible to provide an angling float which indicates that a bite has occurred by an indicator signal no longer being received by the angler. The float is simple and cheap to produce, and existing floats can be easily modified to incorporate the invention.

## Claims

1. An angling float comprising :
a float body (10;110), and
a signal emitting element (12;112) which can emit an indicator signal comprising light and/or sound which is receivable by a user of the float when the float body (10;110) is in a non-bite condition, indicating that a bite has not occurred, **characterised by**
means for halting the indicator signal or obscuring the indicator signal by the float body (10;110) from the user when the float body (10;110) is in a bite condition, indicating that a bite has occurred.

2. An angling float as claimed in claim 1, wherein the float body (10;110) includes a first float part (14;114), and a second float part (16;116) slidable in the first float part (14;114).

3. An angling float as claimed in claim 2, wherein the float body (10;110) further includes a movement limiting element (36;136) which limits sliding movement of the second float part (16;116) relative to the first float part (14;114), so as to prevent or limit undesirable separation of the first and second float parts (14,16;114,116).

4. An angling float as claimed in claim 2 or claim 3, wherein the signal emitting element (12;112) is provided on the second float part (16;116) and projects, or is spaced, outwardly from an in use upper end of the first float part (14;114), when the float body (10;110) is in the non-bite condition.

5. An angling float as claimed in claim 4, wherein the signal emitting element (12;112) is drawn into the first float part (14;114) by sliding movement of the second float part (16;116), so as to be obscured from a user, as or when the float body (10;110) adopts the bite condition.

6. An angling float as claimed in any one of the preceding claims, wherein, when the indicator signal is or includes light, the emitted light energy is provided by a chemically activated agent.

7. An angling float as claimed in claim 6, wherein the chemically activated agent comprises a luminescent isotope or isotopes.

8. An angling float as claimed in any one of claims 1 to 4, wherein, when the indicator signal is or includes light, the emitted light energy is provided by an electrically activated device.

9. An angling float as claimed in claim 7, wherein the electrically activated device is a light emitting diode.

10. An angling float as claimed in any one of the preceding claims, wherein the signal emitting element includes a switch which deactivates the indicator signal, when the float body (10;110) is in the bite condition.
